# EUROPÄISCHE PATENTSCHRIFT

(11) **EP 4 005 923 B1**
(45) Veröffentlichungstag und Bekanntmachung des Hinweises auf die Patenterteilung: **30.08.2023**
(21) Anmeldenummer: 20215644.4
(22) Anmeldetag: 18.12.2020
(51) Int. Cl.: B64D 11/00, B64D 11/04

(54) **BORDVERPFLEGUNGSSTATION**
ON-BOARD CATERING STATION
STATION DE RAVITAILLEMENT EMBARQUÉE

(30) Priorität: 30.11.2020 EP 20210838
(43) Veröffentlichungstag der Anmeldung: 01.06.2022
(73) Patentinhaber: Bucher Leichtbau AG, 8117 Fällanden (CH)
(72) Erfinder: HEIDRICH, Tobias, 57567 Daaden (DE); MÜLLER, Ruxandra, 8152 Glattpark (Opfikon) (CH)
(74) Vertreter: Liebetanz, Michael

(56) Entgegenhaltungen:
- EP-A1- 3 552 963
- EP-A1- 3 736 214

## Beschreibung

### TECHNISCHES GEBIET

Die vorliegende Erfindung betrifft eine Bordverpflegungsstation umfassend eine quer zur Flugzeughauptrichtung ausrichtbare rückseitige Leichtbauteilwand und ein zur rückseitigen Leichtbauteilwand parallel ausgerichtetes erstes vorderes Wandelement, an dem ein um eine vertikale Verschwenkachse aus einer Parkposition über die Vorderseite des ersten vorderen Wandelementes nach vorne verschwenkbares zweites vorderes Wandelement angeordnet ist, wobei das erste und das zweite vordere Wandelement in der eingeklappten oder Parkposition des zweiten vorderen Wandelementes eine gemeinsame der Fläche der. rückseitigen Leichtbauteilwand entsprechende, parallel deckungsgleiche, bündige vordere Fläche bilden.

### STAND DER TECHNIK

EP 3 736 214 A beschreibt Teile einer Bordverpflegungsstation, auch Monument genannt, die in einer Flugzeugpassagierkabine neben einem Kabinenraum, z.B. vor einer ansonsten ungenutzten Ausgangstür, installierbar ist. Das Monument enthält nur Teile einer Bordverpflegungsstation, da es eine geringe Gesamtbreite hat und im Wesentlichen eine Seitentür mit einem Außengriff umfasst, wobei die Tür in den Kabinenraum entfaltet werden kann, um eine Gruppe von ineinander verschachtelten, miteinander verbundenen Paneelen im Inneren freizulegen. Die ineinander verschachtelten Paneele können in ähnlicher Weise in den Kabinenraum entfaltet werden, um eine im Wesentlichen horizontale Arbeitsfläche und unterhalb der Arbeitsfläche vertikal gestapelte Fächer zu bilden, in denen vorübergehend Aufbewahrungsschubladen und ein an die Aufbewahrungsschubladen angrenzender Wagenraum untergebracht werden können, wobei der Wagenraum einen Trolley halber Größe aufnehmen kann.

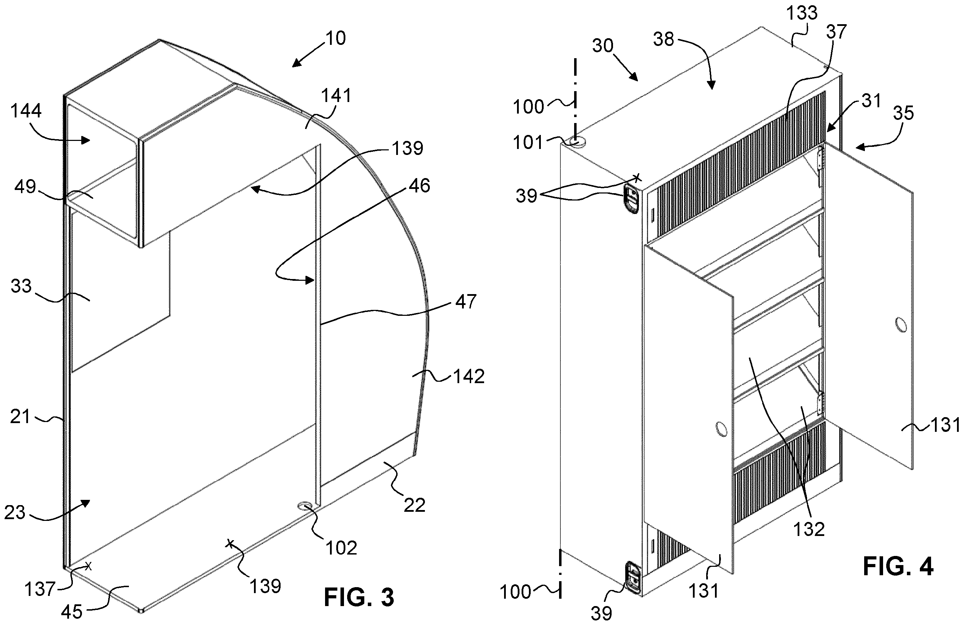

EP 3 552 963 A offenbart ein Monument mit den Merkmalen des Oberbegriffs des Anspruchs 1, welches in der Nähe der Ausstiegstüren von Flugzeugen aufgestellt werden kann, um die Türöffnungen als temporäre Arbeitsräume für die Kabinenbesatzung oder als Zielräume für Passagiere zu nutzen, sobald die Reiseflughöhe erreicht ist. Zu einem solchen umbaubaren Monument gehören auch Teile, die sich bei Betätigung einer Außenverriegelung mit einer Hand in einen Flugzeugquergang ausfahren oder schwenken lassen. Ein System von zwei verwandelbaren Monumenten auf beiden Seiten der Ausgangstür kann gemeinsam den temporären Raum definieren. Der obere und mittlere Teil des Monuments kann zusätzliche Ablage- oder Selbstbedienungsabteile enthalten, in denen den Fluggästen Erfrischungen oder andere Annehmlichkeiten zur Verfügung stehen. Die Fig. 10 der EP 3 552 963 zeigt solche Produkte, die an einer ausschwenkbaren Tür auf innen an dieser angebrachten Regalböden befestigt sind, wobei die Tür wie in Fig. 3 dargestellt durch ausklappbare Regalböden gehalten wird.

Eine dazu ähnliche ausfaltbare Verpflegungsstation ist aus der US 2019/337 623 A1 bekannt. Die Verpflegungsstation oder das Monument ist dabei neben einem Kabinenraum innerhalb einer Flugzeugpassagierkabine, z.B. auf beiden Seiten einer Ausgangstür, installierbar, und vor einer Trennwandtür, die zwischen einer standardmäßig geschlossenen Position und einer offenen Position, die sich in den Kabinenraum erstreckt, geschwenkt werden kann, besteht eine verriegelbare Regalfläche als Theke. Wenn die Trennwandtür ausgefahren wird, schwenkt die Theke zusammen mit der Tür, wobei die vollständig ausgefahrene Stellung der offenen Stellung der Trennwandtür entspricht. Dabei bestehen oben und unten an der Tür Schwenkgestänge, mit denen die Tür verriegelbar ist.

US 2017/283 059 A1 zeigt ein Monumentgehäuse, das durch eine nach hinten gerichtete Wand, eine nach vorne gerichtete Wand und mindestens eine zum Gang gerichtete Seitenwand begrenzt ist, die so konfiguriert ist, dass sie an einen Gang eines Flugzeugs angrenzt, wobei die nach hinten gerichtete Wand und die nach vorne gerichtete Wand im Wesentlichen parallel zueinander sind. Dabei sind eine Mehrzahl von Abteilen innerhalb des Monumentgehäuses vorgesehen, darunter eine Heiz- oder Kühleinheit.

### DARSTELLUNG DER ERFINDUNG

Basierend auf diesem Stand der Technik liegt der Erfindung die Aufgabe zu Grunde eine Bordverpflegungsstation anzugeben, die eine einfachere Bedienung aufweist, im ausgefahrenen Zustand stabiler ausgestaltet ist und bei Anweisung aus dem Cockpit schneller einfahrbar ist. Zusätzlich ist inhärent von Vorteil, dass eine solche Bordverpflegungsstation einen Mehrwert bietet, indem spezielle Module für unterschiedliche Missionsprofile eingesetzt werden können.

Eine solche Bordverpflegungsstation umfassend eine quer zur Flugzeughauptrichtung ausgerichtete rückseitige Leichtbauteilwand, ein zur rückseitigen Leichtbauteilwand parallel ausgerichtetes erstes vorderes Wandelement, an dem ein um eine vertikale Verschwenkachse aus einer Parkposition über die Vorderseite des ersten vorderen Wandelementes nach vorne verschwenkbares zweites vorderes Wandelement angeordnet ist, wobei das erste und das zweite vordere Wandelement in der eingeklappten oder Parkposition des zweiten vorderen Wandelementes eine gemeinsame der Fläche der. rückseitigen Leichtbauteilwand entsprechende, parallel deckungsgleiche, bündige vordere Fläche bilden. Dabei ist das zweite vordere Wandelement ein kastenförmiges Verpflegungsfach, wobei in der eingeklappten Position eine Zugangsseite des kastenförmigen Verpflegungsfach an die Innenseite der rückseitigen Leichtbauteilwand stösst.

Mit anderen Worten, anstelle einer um die besagte vertikale Achse verschwenkbare Tür, vor der dann zusätzliche ausklappbare Regale angeordnet werden, gegebenenfalls mit Einschubfächern aus einem dafür geleerten Trolley, liefert die Erfindung ein vollständiges kastenförmiges Verpflegungsfach. Dabei wird ausgenutzt, dass die Tiefe des kastenförmigen Verpflegungsfaches bei der Verschwenkung um 90 Grad es gleichzeitig ermöglicht, dass die an der Schmalseite der nahe der Verschwenkachse befindlichen Seitenwand gerade im Bereich der Vorderkante an der Bodenfläche der Verpflegungsstation zu liegen kommt, so dass eine dortige Verriegelung im Bereich der Unterkante des ersten vorderen Wandelementes und am Boden des Flugzeuges oder in einem Sockelbereich einen vorteilhaften Hebelarm bereitstellt.

Dadurch, dass ein vollständiges kastenförmiges Verpflegungsfach ausschwenkbar ist, besteht vor dem rückseitigen Leichtbauteil direkt der Zugang zum verschwenkten Verpflegungsfach und es geht keine Tiefe in Richtung der Längsrichtung des Flugzeuges verloren. Die Tiefe des Verpflegungsfaches hat zudem den Vorteil, dass es eine einfache Fixierung in der Einsatzposition mit einem vorteilhaften Momentenverhältnis aus dem Abstand der Verschwenkachse zur Verriegelungsachse erlaubt.

An der Unterseite des Verpflegungsfaches kann eine Einsatzpositions-Bodenverriegelung und/oder an der Oberseite des Verpflegungsfaches eine Einsatzpositions-Deckenverriegelung für die Einsatzposition vorgesehen sein, zu denen komplementäre Einsatzpositions-Bodenverriegelungs- und -Deckenverriegelungselemente in einem Zwischenboden und/oder einer Sockelfläche oder Flugzeugbodenfläche vorgesehen sind, die in der einer Drehung des Verpflegungsfaches um 90 Grad entsprechenden Einsatzposition für einen lösbaren Verriegelungseingriff angeordnet sind.

Als Boden- und/oder Deckenverriegelungselement des kastenförmigen Verpflegungsfaches kommen die üblichen Verriegelungen für Einschubfächer zum Einsatz, insbesondere eine Bolzen / Lochverbindung.

Dabei können die Einsatzpositions-Bodenverriegelung und/oder -Deckenverriegelung gegenüber der Verschwenkachse entlang der kurzen Kante der Oberseite des Verpflegungsfaches in der gegenüberliegenden Ecke angeordnet sind, das heisst in der Tiefe des Verpflegungsfaches, so dass nach dem Verschwenken um 90 Grad diese Verriegelungen nahe zu dem vorderen Leichtbauwandteil verschwenkt sind, um dann dort in einen Zwischenboden bzw. in eine Bodenfläche versenkt zu werden.

Die Einsatzpositions-Boden- bzw. Deckenverriegelung kann für einen Eingriff in der Einsatzposition insbesondere koaxial mit den Einsatzpositions-Bodenverriegelungs- und Deckenverriegelungselemente vorgesehen sein.

An der Unterseite des Verpflegungsfaches können zudem jeweils eine Parkpositions-Bodenverriegelung und/oder an der Oberseite des Verpflegungsfaches eine Parkpositions-Deckenverriegelung für die Parkposition vorgesehen sein, zu denen komplementäre Parkpositions-Bodenverriegelungs- und Deckenverriegelungselemente in einem Zwischenboden und/oder einer Sockelfläche oder Flugzeugbodenfläche vorgesehen sind.

Dabei können die Parkpositions-Bodenverriegelung und/oder -Deckenverriegelung gegenüber der Verschwenkachse in der diametral gegenüberliegenden Ecke der Oberseite des Verpflegungsfaches angeordnet sein. Dann wird das Verpflegungsfach gangseitig verriegelt.

Die vertikale Verschwenkachse kann in einem vorbestimmten Abstand zur Flugzeuginnenraumseitenkante angeordnet sein, so dass zwischen vorderseitiger Leichtbauteilwand und rückseitiger Leichtbauteilwand ein seitlicher Hohlraum neben der vertikale Verschwenkachse und ein nach unten durch einen Zwischenboden gegenüber dem kastenförmigen Verpflegungsfach gebildeter Überkopfstauraum ausgebildet sind, wobei letzterer optional durch eine Seitentür zugänglich ist.

Der vorbestimmte Abstand der vertikalen Verschwenkachse von dem durch die Seitenkante vorgegebenen Seitenbereich sollte derart vorbestimmt sein, dass das kastenförmigen Verpflegungsfach um 90 Grad ausklappbar ist, um bei einem Einbau in ein Flugzeug einen Raum freizulassen, der insbesondere für einen an einer Tür vorgesehenen Notrutschenbehälter der zugeordneten Flugzeugtür vorhergesehen ist.

In dem seitlichen Hohlraum der Station können Versorgungsleitungen, Kälte- und Ventilationsgeräte für das Verpflegungsfach und darin eingebaute Geräte vorgesehen sein, so dass dort kein zusätzlicher Stauraum benötigt wird.

Eine Bodenplatte kann für das Verpflegungsfach vorgesehen sein, so dass die Verriegelungen unabhängig vom Flugzeugboden sind.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind, wobei die Zeichnungen folgende Abbildungen umfassen:
- Fig. 1: zeigt eine schematische perspektivische Ansicht einer Bordverpflegungsstation gemäss einem Ausführungsbeispiel der Erfindung in ihrer Parkposition;
- Fig. 2: zeigt eine weitere schematische perspektivische Ansicht der Bordverpflegungsstation der Fig. 1, die gegenüber der Fig. 1 von der Rückseite aus dargestellt ist;
- Fig. 3: zeigt eine weitere schematische perspektivische Ansicht der Hülle der Bordverpflegungsstation der Fig. 1 ohne das kastenförmige Verpflegungsfach;
- Fig. 4: zeigt eine schematische perspektivische Ansicht einer Ausführung eines Verpflegungsfaches für den Einsatz in dem Ausführungsbeispiel nach der Fig. 1, wobei Türen des Verpflegungsfaches für einen Blick in dessen Inneres geöffnet sind;
- Fig. 5: zeigt eine weitere schematische perspektivische Ansicht der Bordverpflegungsstation der Fig. 3 mit dem eingesetzten kastenförmigen Verpflegungsfach nach Fig. 4;
- Fig. 6: zeigt eine weitere schematische perspektivische Ansicht der Bordverpflegungsstation der Fig. 1, die gegenüber der Fig. 5 von der Rückseite aus dargestellt ist;
- Fig. 7: zeigt eine Seitenansicht einer Bordverpflegungsstation mit einem verschwenkten Verpflegungsfach; und
- Fig. 8: zeigt eine schematische perspektivische Ansicht einer gegenüber der Fig. 4 anderen Ausführung eines Verpflegungsfaches für den Einsatz in dem Ausführungsbeispiel nach der Fig. 7, wobei Türen des Verpflegungsfaches für einen Blick in dessen Inneres geöffnet sind.

### BESCHREIBUNG BEVORZUGTER AUSFÜHRUNGSFORMEN

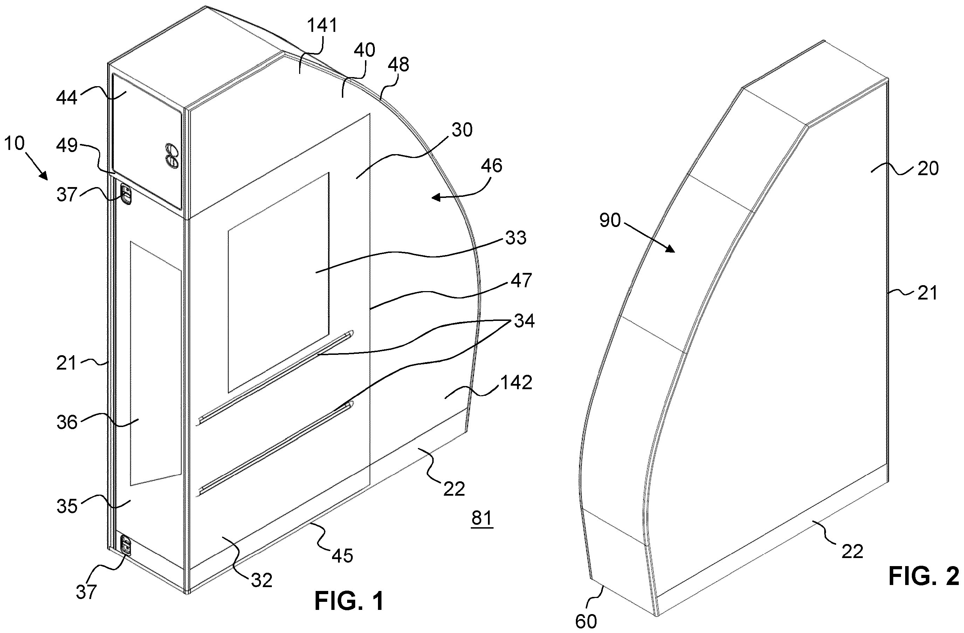

Die Fig. 1 zeigt eine schematische perspektivische Ansicht einer Bordverpflegungsstation 10, auch Monument genannt, gemäss einem Ausführungsbeispiel der Erfindung in ihrer Parkposition; wobei die Fig. 2 eine weitere schematische perspektivische Ansicht der Bordverpflegungsstation 10 der Fig. 1 zeigt, die gegenüber der Fig. 1 von der Rückseite 90 aus dargestellt ist. Die Rückseite 90 ist entsprechend gegenüber der Flugzeugseitenwand gekrümmt und folgt mit ihrer Kontur dem Flugzeugrumpf. Die Befestigungselemente, mit denen die Bordverpflegungsstation 10 an dem Flugzeugrumpf und dem Boden befestigbar ist, sind in den Figuren nicht dargestellt.

Das rückwärtige Leichtbauteil 20 ist vorzugsweise eine einzige Wand auf, mit einer vorderen zum Flugzeuggang weisenden Kante 21, einer Flugzeuginnenraumseitenkante 60 und einer Sockelleiste 22 mit einer Bodenfläche 45. Sie könnte optional vorgesehen sein, ist aber im Allgemeinen als Stossleiste zur Schutz der Bordverpflegungsstation 10 vorgesehen. Dabei zeigt die hier in Bodennähe definierte Flugzeuginnenraumseitenkante 60 im Wesentlichen an, dass ein Abstand zwischen der Ebene der Rückseite 90 der Station 10 und der später weiter unten eingeführten Verschwenkachse 100 besteht, aus dem sich das Technikabteil 46 heraus definieren wird.

Das vorderseitige Leichtbauteil 40 grenzt an seiner, im Einbau zur Flugzeugwand weisenden Kante an der Rückseite 90 an und weist ebenfalls eine Sockelleiste 22 auf, die in eine Vorderkante einer Sockelfläche 45 übergeht. Das vorderseitige Leichtbauteil 40 weist einen Ausschnitt auf, der vollkommen von der Vorderfläche 32 des Verpflegungsfaches 30 eingenommen wird. Mit anderen Worten, das vorderseitige Leichtbauteil 40 und die Vorderfläche 32 des Verpflegungsfaches 30 sind bündig und bilden eine gemeinsame miteinander bündige Fläche. In der Vorderfläche 32 können ein Bildschirm 33 für Fluginformationen und/oder hier darunter horizontale Rippen 34 vorgesehen sein, die als Bumper- oder Anstossleisten einen Schutz der Fläche bedeuten. Anstelle von Rippen können auch Einstecktaschen für Information und andere im Wesentlichen flächige Elemente vorgesehen sein.

Das Verpflegungsfach 30 hat eine gangseitige Vorderseite 35 mit beispielsweise einer transparenten Scheibe 36 für einen Blick in das Innere des Verpflegungsfaches 30 und an der der Vorderkante 21 des rückwärtigen Leichtbauteils 20 verfügt das Verpflegungsfach 30 oben und unten über jeweils eine Verriegelungsanordnung 37.

Die Verriegelungsanordnung 37 ist in der in der Fig. 1 dargestellten eingeschwenkten oder Parkposition in der Sockelfläche 45 verriegelt. Oben ist das Verpflegungsfach 30 in dem horizontalen Zwischenboden 49 der Bordverpflegungsstation 10 verriegelt. Der andere Befestigungspunkt des Verpflegungsfaches 30 liegt diametral gegenüber im Bereich der gegenüberliegenden Eckkante an der Schwenkachse 100, wobei die Lager in Fig. 3 und 4 als Schwenkeinrichtung 101 bezeichnet und in Richtung der Schwenkachse 100 übereinander angeordnet sind.

Mit dem Pfeil 46 ist ein Technikabteil bezeichnet, bei dem es sich um den Raum der Station 10 handelt, der im Bereich hinter der vertikalen Kante 47 des vorderseitigen Leichtbauteils besteht und der sich insbesondere daraus ergibt, dass das Verpflegungsfach 30 nur eine durch die Formgebung der Bordverpflegungsstation 10 vorgegebene maximale Höhe haben kann, die einen Stegübergang 48 zwischen der oberen Teilfläche 141 des vorderseitigen Leichtbauteils 40 und der unteren seitlichen Teilfläche 142 bildet.

Hinter der oberen Teilfläche 141 oberhalb des Zwischenbodens 49 ist ein Überkopfstaufach 144 mit einer Tür 44 vorgesehen.

Die Kante 47 gegenüber dem Verpflegungsfach 30 liegt parallel zur Schwenkachse 100, die schräg nach innen in einem kleinen Abstand in dem Verpflegungsfach 30 verläuft, vorteilhafterweise in einem 45 Gradwinkel von der Kante 47 ausgehend und hat damit einen gleichen Abstand zu beiden benachbarten Seitenkanten.

Die Fig. 1 zeigt eine Sicht schräg von oben in ein mögliches Flugzeuginneres. Dabei wäre zeichnerisch rechts vor dem Sockel 22 eine auf der rechten Seite in Flugrichtung befindliche

Tür und damit auch ein Notrutschenbehälter, der mit dem Bezugszeichen 81 symbolisch in diesem Bereich eingezeichnet ist. Dann zeigt das Verpflegungsfach 30 in Bezug auf die Flugrichtung nach hinten und das "rückwärtige" Leichtbauteil 20 zeigt in Flugrichtung nach "vorne". Dies liegt an der hier gewählten Konvention, die Ausklappebene des Verpflegungsfaches 30 als nach vorne in Bezug auf die Bordverpflegungsstation zu bezeichnen.

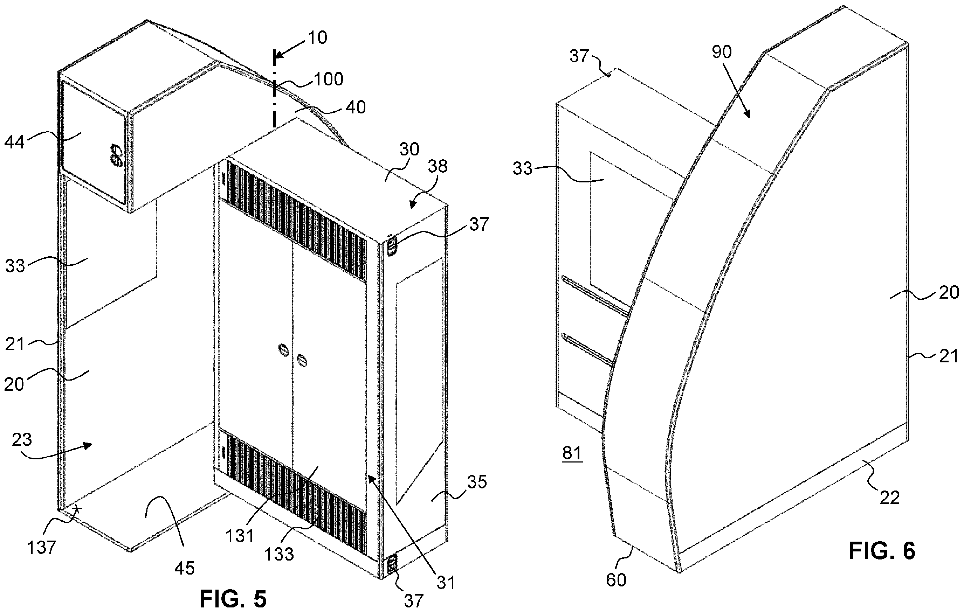

Fig. 3 zeigt eine weitere schematische perspektivische Ansicht der Hülle der Bordverpflegungsstation 10 der Fig. 1 ohne das kastenförmige Verpflegungsfach 30 und Fig. 4 zeigt eine schematische perspektivische Ansicht einer Ausführung eines Verpflegungsfaches 30 für den Einsatz in dem Ausführungsbeispiel nach der Fig. 1, wobei Türen 131 des Verpflegungsfaches 30 für einen Blick in dessen Inneres geöffnet sind. Fig. 5 zeigt dazu eine weitere schematische perspektivische Ansicht der Bordverpflegungsstation 10 der Fig. 3 mit dem eingesetzten kastenförmigen Verpflegungsfach 30 nach Fig. 4. Fig. 6 zeigt eine weitere schematische perspektivische Ansicht der Bordverpflegungsstation 10 der Fig. 1, die gegenüber der Fig. 5 von der Rückseite 90 aus dargestellt ist;

Fig. 3 zeigt den Boden der Sockelfläche 45, auf der das Verpflegungsfach 30 schwenkbar angeordnet ist. Mit dem Bezugszeichen 137 ist die Verriegelungsöffnung gekennzeichnet, die im Zusammenspiel mit der Verriegelungsanordnung 37 zusammenwirkt, mit der Einheiten in Flugzeugen, wie Türen in der geschlossenen Position verriegelt werden. Daher ist diese Verriegelungsöffnung 137 unten im Boden / Sockelfläche 45 nahe der Innenseite 23 des rückwärtigen Leichtbauteils 20 angeordnet und darüber entsprechend von unten im Zwischenboden 49. Die dazu gehörige Verriegelungseinrichtung 37 ist in Fig. 4 auf der Oberseite 38 in der rechten vorderen Ecke zu erkennen.

In der hinteren linken Ecke ist schematisch die Schwenkachse 100 dargestellt, die durch den überstehenden Zylinder 101 oberhalb der Oberseite 38 und unterhalb der Unterseite hindurchgeht. Der überstehende Zylinder 101 ist Teil der Schwenkeinrichtung und passt sich in eine entsprechende Zylinderaufnahme 102 ein, die in der Sockelfläche 45 vorgesehen ist. Es ist ebenfalls eine umgekehrte Lösung mit angesetzten Bolzen unter dem Zwischenboden 49 und auf der Sockelfläche 45 denkbar, wenn entsprechende Zylinderaufnahmen im Korpus der Oberseite und Unterseite des Verpflegungsfaches 30 vorgesehen sind.

Hinter den Türen 131 des Verpflegungsfaches 30 sind schräg angeordnete Displayregale 132 vorgesehen. Oberhalb und unterhalb des Schrankes können Querrolladentüren 133 vorgesehen sein. Allerdings ist es üblicher, diese beiden Räume oben und unten um den Schrank mit den Türen 131 als weitere Schubfächer mit Türen zu versehen oder diese Flächen als Zierleisten auszugestalten.

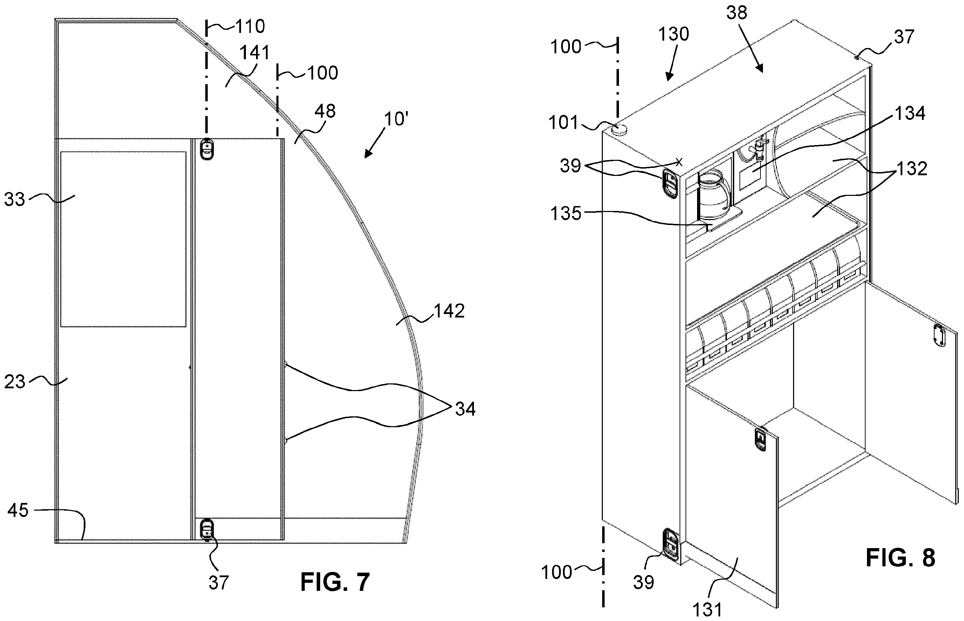

Fig. 7 zeigt eine Seitenansicht einer weiteren Bordverpflegungsstation 10' mit einem verschwenkten anderen Verpflegungsfach 130; und Fig. 8 zeigt eine schematische perspektivische Ansicht einer gegenüber der Fig. 4 anderen Ausführung eines Verpflegungsfaches 130 für den Einsatz in dem Ausführungsbeispiel nach der Fig. 7, wobei Türen 131 des Verpflegungsfaches 130 für einen Blick in dessen Inneres geöffnet sind.

Hier kann in dem Hohlraum hinter den Türen 131 beispielsweise ein Stauraumvorgesehen sein, es kann weitere offene Displayregale 132, eine Heisswasserzubereitung 134 und eine Kaffeemaschine mit Wärmeplatte 135 geben. Diese eine elektrische Stromversorgung und eventuell eine Wasserzufuhr bedingenden Elemente sind deswegen hier beispielhaft angegeben, weil die Anordnung des vollständig verschwenkbaren Verpflegungsfaches 30 oder 130 solche zusätzlichen Elemente im Technikabteil 46 vorsehen kann, die dann direkt mit in den Zeichnungen nicht sichtbaren Versorgungsleitungen verbindbar sind. Dieses Technikabteil 46 steht in einer Breite (in Bezug auf den Flugzeugrumpf) zur Verfügung, die dem Platz 81 für die Notrutschenelemente entspricht.

Wesentlich ist, dass die Anordnung des Verpflegungsfaches 30 oder 130 in der Einsatzposition um 90 Grad gegenüber der Parkposition verschwenkt ist, nachdem die Verriegelungen 37 / 137 gelöst worden sind. Denn dann führt eine Drehung des Verpflegungsfaches 30 oder 130 um 90 Grad gerade dazu, dass die in der Parkposition nahe dem Technikabteil 46 und der Innenseite des rückwärtigen Leichtbauteils 20 befindlichen Verriegelungsanordnungen 39 gegenüber den mit dem Bezugszeichen 139 bezeichneten Verriegelungsanordnungsöffnungen vorgesehen sind und somit das Monument in einfacher Weise in der Einsatzposition sicher feststellbar ist. Durch die grosse Tiefe des Verpflegungsfaches 30 oder 130, wie 20 bis 60 Zentimeter, insbesondere zwischen 30 und 50 Zentimeter, entspricht der Abstand zwischen der Verschwenkachse 100 und der Achse der Einsatzpositionsverriegelung 110 wie in Fig. 7 eingezeichnet mehr als ein Drittel der ausgeschwenkten Länge des gedrehten Verpflegungsfaches 30 oder 130, welches im dargestellten Ausführungsbeispiel ein Tiefe zu Breite-Verhältnis von zwei zu fünf hat, also 40%. Damit kann selbst ein Druck eines Benutzers auf der von der Station 10 oder 10' entfernten Seite auf die Vorderkante des Verpflegungsfaches 30 oder 130 kein Moment erzeugen, welches die Verriegelung durch den Achsenzylinder 101 und die Einsatzpositionsverriegelung überwindet. Damit ist diese Konstruktion auch in plötzlich auftretenden Turbulenzen sicher gewährleistet. Gegenüber dem Stand der Technik liegt zudem der Vorteil vor, dass durch Lösen der beiden Verriegelungen 39/139 oben und unten und durch einfaches Zurückschwenken des Verpflegungsfaches 30 / 130 in die Parkposition, selbst wenn dort Verpflegungselemente noch frei herumliegen, und ein Verriegeln über die Verriegelungsanordnung 37/137 oben und unten die Verpflegungsstation 10 oder 10' in kürzester Zeit gesichert ist. Dieser Abstand zwischen den Verriegelungs- und Drehachsen 110 und 100 ist mindestens 25 % und maximal 50% des Abstands in Längsrichtung des Schrankfaches 30, 130 zwischen 100 und der Verriegelung 37, um eine gute Funktionalität auf Grund der bestehenden Tiefe des Faches mit einer sicheren Verriegelung zu verbinden.

**BEZUGSZEICHENLISTE**

| | | | |
|---|---|---|---|
| 10 | Bordverpflegungsstation | 60 | Flugzeuginnenraum-seitenkante |
| 10' | Bordverpflegungsstation | | |
| 20 | rückwärtiges Leichtbauteil | 81 | Platz des |
| 21 | Vorderkante | | Notrutschenbehälters |
| 22 | Sockelleiste | 90 | Rückseite |
| 23 | Innenseite | 100 | vertikale Schwenkachselung |
| 11 | Sockelleiste | 101 | Schwenkeinrichtung |
| 30 | Verpflegungsfach | | (Zylinder) |
| 31 | Zugangsseite | 102 | Schwenkeinrichtung |
| 32 | Vorderfläche | | (Zylinderaufnahme) |
| 33 | Bildschirm | 110 | Achsenposition der |
| 34 | Schutzrippen | | Einsatzpositionsverriege |
| 35 | gangseitige Vorderseite | 130 | Verpflegungsfach |
| 36 | transparente Scheibe | 131 | Tür |
| 37 | Verriegelungsanordnung | 132 | Displayregal |
| 38 | Oberseite des | 133 | Querrolladentür (oder |
| | Verpflegungsfaches | | Furnierplatte) |
| 39 | Einsatzpositionsverriegelung | 134 | Heisswasserbereiter |
| 40 | vorderseitiges Leichtbauteil | 135 | Kaffeemaschine |
| 43 | Überkopfstauraum | 137 | Verriegelungsöffnung |
| 44 | Tür | 139 | Einsatzpositions-verriegelungsöffnung |
| 45 | Sockelfläche | | |
| 46 | Technikabteil | 141 | obere Teilfläche |
| 47 | Kante gegenüber | 142 | seitliche Teilfläche |
| | Verpflegungsfach | 144 | Überkopfstauraum |
| 48 | Stegübergang | | |
| 49 | Zwischenboden | | |

## Patentansprüche

1. Bordverpflegungsstation (10, 10') umfassend eine quer zur Flugzeughauptrichtung ausrichtbare rückseitige Leichtbauteilwand (20) und eine zur rückseitigen Leichtbauteilwand (20) parallel ausgerichtete erste vordere Leichtbauteilwand (40), an der eine um eine vertikale Verschwenkachse (100) aus einer Parkposition über die Vorderseite der ersten vorderen Leichtbauteilwand (40) nach vorne verschwenkbare zweite vordere Leichtbauteilwand (30) angeordnet ist, wobei die erste (40) und die zweite (30) vordere Leichtbauteilwand in der Parkposition der zweiten vorderen Leichtbauteilwand (30) eine gemeinsame der Fläche der rückseitigen Leichtbauteilwand (20) entsprechende, parallel deckungsgleiche, bündige vordere Fläche bilden, **dadurch gekennzeichnet, dass** die zweite vordere Leichtbauteilwand Teil eines kastenförmigen Verpflegungsfach (30, 130) ist, wobei in der Parkposition eine Zugangsseite (31) des kastenförmigen Verpflegungsfaches (30) an die Innenseite (22) der rückseitigen Leichtbauteilwand (20) stösst.

2. Bordverpflegungsstation (10, 10') nach Anspruch 1, **dadurch gekennzeichnet, dass** an der Unterseite des Verpflegungsfaches (30, 130) eine Einsatzpositions-Bodenverriegelung (39) und/oder an der Oberseite des Verpflegungsfaches (30, 130) eine Einsatzpositions-Deckenverriegelung (39) für die Einsatzposition vorgesehen sind, zu denen komplementäre Einsatzpositions-Bodenverriegelungs- und-Deckenverriegelungselemente (139) in einem Zwischenboden (49) und/oder einer Sockelfläche (45) vorgesehen sind, die in der einer Drehung des Verpflegungsfaches (30, 130) um 90 Grad entsprechenden Einsatzposition für einen lösbaren Verriegelungseingriff angeordnet sind.

3. Bordverpflegungsstation (10, 10') nach Anspruch 2, **dadurch gekennzeichnet, dass** die Einsatzpositions-Bodenverriegelung und/oder-Deckenverriegelung (39) gegenüber der Verschwenkachse (100) entlang der kurzen Kante der Oberseite (38) des Verpflegungsfaches (30, 130) in der gegenüberliegenden Ecke angeordnet sind.

4. Bordverpflegungsstation (10, 10') nach Anspruch 2 oder 3, **dadurch gekennzeichnet, dass** die Einsatzpositions-Boden- bzw. Deckenverriegelung (39) für einen Eingriff in der Einsatzposition insbesondere koaxial mit den Einsatzpositions-Bodenverriegelungs- und Deckenverriegelungselemente (139) vorgesehen sind.

5. Bordverpflegungsstation (10, 10') nach irgendeinem der Ansprüche 1 bis 4, **dadurch gekennzeichnet, dass** an der Unterseite des Verpflegungsfaches (30, 130') eine Parkpositions-Bodenverriegelung (37) und/oder an der Oberseite des Verpflegungsfaches (30, 130') eine Parkpositions-Deckenverriegelung (37) für die Parkposition vorgesehen sind, zu denen komplementäre Parkpositions-Bodenverriegelungs- und Deckenverriegelungselemente (137) in einem Zwischenboden (49) und/oder einer Sockelfläche (45) vorgesehen sind.

6. Bordverpflegungsstation (10, 10') nach Anspruch 5, **dadurch gekennzeichnet, dass** die Parkpositions-Bodenverriegelung und/oder -Deckenverriegelung (37) gegenüber der Verschwenkachse (100) in der diametral gegenüberliegenden Ecke der Oberseite (38) des Verpflegungsfaches (30, 130) angeordnet sind.

7. Bordverpflegungsstation (10, 10') nach einem der Ansprüche 1 bis 6, **dadurch gekennzeichnet, dass** die vertikale Verschwenkachse (100) in einem vorbestimmten Abstand zur Flugzeuginnenraumseitenkante (60) angeordnet ist, so dass zwischen vorderseitiger Leichtbauteilwand (40) und rückseitiger Leichtbauteilwand (20) ein seitlicher Hohlraum (46) neben der vertikale Verschwenkachse (100) und ein nach unten durch einen Zwischenboden (49) gegenüber dem kastenförmigen Verpflegungsfach (30) gebildeter Überkopfstauraum (144) ausgebildet sind, wobei letzterer optional durch eine Seitentür (44) zugänglich ist.

8. Bordverpflegungsstation (10, 10') nach Anspruch 7, **dadurch gekennzeichnet, dass** der vorbestimmte Abstand der vertikalen Verschwenkachse (100) von dem durch die Seitenkante (60) vorgegebenen Seitenbereich derart vorbestimmt ist, dass das kastenförmigen Verpflegungsfach (30, 130') um 90 Grad ausklappbar ist, um bei einem Einbau in ein Flugzeug einen Raum (81) freizulassen, der insbesondere für einen an einer Tür vorgesehenen Notrutschenbehälter der zugeordneten Flugzeugtür vorhergesehen ist.

9. Bordverpflegungsstation (10, 10') nach Anspruch 7 oder 8, **dadurch gekennzeichnet, dass** in dem seitlichen Hohlraum (46) Versorgungsleitungen, Kälte- und Ventilationsgeräte für das Verpflegungsfach (30, 130) und darin eingebaute Geräte vorgesehen sind.

10. Bordverpflegungsstation (10, 10') nach einem der Ansprüche 1 bis 9, **dadurch gekennzeichnet, dass** sie eine Bodenplatte (45) für das Verpflegungsfach (30, 130) aufweist.

11. Bordverpflegungsstation (10, 10') nach einem der Ansprüche 1 bis 10, **dadurch gekennzeichnet, dass** der Abstand zwischen den Verriegelungs- und Drehachsen (110 und 100) mindestens 25% und maximal 50% des Abstands in Längsrichtung des Schrankfaches (30, 130) beträgt, insbesondere zwischen 33% und 40% des besagten Abstandes.

## Claims

1. On-board catering station (10, 10') comprising a rear light-weight partition (20) which can be aligned transversely to the main direction of the aircraft and a first front light-weight partition (40) which is aligned parallel to the rear light-weight partition (20) and on which a second front light-weight partition (30) is arranged which can be pivoted forwards about a vertical pivot axis (100) from a parking position over the front side of the first front light-weight partition (40), wherein the first (40) and the second (30) front light-weight part wall in the parking position of the second front light-weight part wall (30) form a common flush front surface corresponding to the surface of the rear light-weight part wall (20) and congruent in parallel, **characterised in that** the second front lightweight part wall is part of a box-shaped catering compartment (30, 130), wherein in the parking position an access side (31) of the box-shaped catering compartment (30) abuts the inner side (22) of the rear lightweight part wall (20).

2. On-board catering station (10, 10') according to claim 1, **characterised in that** a deployment position floor locking latch (39) is provided on the underside of the catering compartment (30, 130) and/or a deployment position ceiling locking latch (39) is provided on the top of the catering compartment (30, 130) for the deployment position, wherein complementary deployment position floor locking latch and ceiling locking latch elements (139) are provided in an intermediate floor (49) and/or a base surface (45) arranged in the deployment position corresponding to a 90 degree rotation of the catering compartment (30, 130) for releasable latching engagement.

3. On-board catering station (10, 10') according to claim 2, **characterised in that** the deployment position floor locking latch and/or ceiling locking latch (39) are arranged opposite the pivot axis (100) along the short edge of the top (38) of the catering compartment (30, 130) in the opposite corner.

4. On-board catering station (10, 10') according to claim 2 or 3, **characterised in that** the deployment position floor locking latch or ceiling locking latch (39) are provided for engagement in the deployment position, in particular coaxially with the deployment position floor locking latch and ceiling locking laqtch elements (139).

5. On-board catering station (10, 10') according to any one of claims 1 to 4, **characterised in that** a parking position floor locking latch (37) is provided at the bottom of the catering compartment (30, 130') and/or a parking position ceiling locking latch (37) is provided at the top of the catering compartment (30, 130') for the parking position, to which complementary parking position floor locking latch and ceiling locking latch elements (137) are provided in an intermediate floor (49) and/or a base surface (45).

6. On-board catering station (10, 10') according to claim 5, **characterised in that** the parking position floor locking latch and/or ceiling locking latch (37) are located in the diametrically opposite corner of the top (38) of the catering compartment (30, 130) with respect to the pivot axis (100).

7. On-board catering station (10, 10') according to any one of claims 1 to 6, **characterized in that** the vertical pivot axis (100) is arranged at a predetermined distance from the aircraft interior side edge (60), so that a lateral cavity (46) adjacent the vertical pivot axis (100) and an overhead storage space (144) formed downwardly by an intermediate floor (49) opposite the box-shaped catering compartment (30) are formed between the front light-weight partition (40) and the rear light-weight partition (20), the latter optionally being accessible through a side door (44).

8. On-board catering station (10, 10') according to claim 7, **characterised in that** the predetermined distance of the vertical pivot axis (100) from the lateral region defined by the lateral edge (60) is predetermined such that the box-shaped catering compartment (30, 130') can be folded out through 90 degrees to leave free, when installed in an aircraft, a space (81) intended in particular for an emergency slide container provided on a door of the associated aircraft door.

9. On-board catering station (10, 10') according to claim 7 or 8, **characterised in that** supply lines, refrigeration and ventilation equipment for the catering compartment (30, 130) and equipment installed therein are provided in the lateral cavity (46).

10. On-board catering station (10, 10') according to any one of claims 1 to 9, **characterised in that** it comprises a base plate (45) for the catering compartment (30, 130).

11. On-board catering station (10, 10') according to any one of claims 1 to 10, **characterised in that** the distance between the locking and rotation axes (110 and 100) is at least 25% and at most 50% of the distance in the longitudinal direction of the catering compartment (30, 130), in particular between 33% and 40% of said distance.

## Revendications

1. Station de ravitaillement embarquée (10, 10') comprenant une cloison légère arrière (20) qui peut être alignée transversalement à la direction principale de l'aéronef et une première cloison légère avant (40) qui est alignée parallèlement à la cloison légère arrière (20) et sur laquelle est disposée une deuxième cloison légère avant (30) qui peut être pivotée vers l'avant autour d'un axe de pivotement vertical (100) à partir d'une position de stationnement sur le côté avant de la première cloison légère avant (40), dans laquelle la première (40) et la deuxième (30) cloison légère avant forment, dans la position de stationnement de la deuxième cloison légère avant (30), une surface frontale affleurante commune correspondant à la surface de la cloison légère arrière (20) et congruente en parallèle, **caractérisée en ce que** la deuxième cloison légère avant fait partie d'un compartiment de ravitaillement (30, 130) en forme de boite, dans laquelle, dans la position de stationnement, un côté d'accès (31) du compartiment de ravitaillement (30) en forme de boite est en contact avec le côté intérieur (22) de la cloison légère arrière (20).

2. Station de ravitaillement embarquée (10, 10') selon la revendication 1, **caractérisé en ce qu'**un verrou de plancher (39) en position de déploiement est prévu sur la face inférieure du compartiment de ravitaillement (30, 130) et/ou un verrou de plafond (39) en position de déploiement est prévu sur la face supérieure du compartiment de ravitaillement (30, 130) pour la position de déploiement, où des éléments complémentaires de verrouillage au sol et au plafond en position de déploiement (139) sont prévus dans un plancher intermédiaire (49) et/ou dans une surface de base (45) et qui sont disposés dans la position de déploiement correspondant à une rotation de 90 degrés du compartiment de ravitaillement (30, 130) pour un engagement de verrouillage libérable.

3. Station de ravitaillement embarquée (10, 10') selon la revendication 2, **caractérisé par le fait que** le verrou de plancher et/ou le verrou de plafond (39) en position de déploiement sont disposés à l'opposé de l'axe de pivotement (100) le long du bord court de la partie supérieure (38) du compartiment de ravitaillement (30, 130) dans le coin opposé.

4. Station de ravitaillement embarquée (10, 10') selon la revendication 2 ou 3, **caractérisé en ce que** les éléments de verrouillage du plancher ou du plafond de la position de déploiement (39) sont prévus pour s'engager dans la position de déploiement, en particulier coaxialement avec les éléments de verrouillage du plancher et du plafond de la position de déploiement (139).

5. Station de ravitaillement embarquée (10, 10') selon l'une quelconque des revendications 1 à 4, **caractérisée en ce qu'**un loquet de sol (37) de position de stationnement est prévu au fond du compartiment de ravitaillement (30, 130') et/ou un loquet de plafond (37) de position de stationnement est prévu au sommet du compartiment de ravitaillement (30, 130') pour la position de stationnement, pour lesquels des éléments complémentaires (137) de loquet de sol et de plafond de position de stationnement sont prévus dans un plancher intermédiaire (49) et/ou dans une surface de base (45).

6. Station de ravitaillement embarquée (10, 10') selon la revendication 5, **caractérisé par le fait que** le verrou de plancher et/ou le verrou de plafond (37) de la position de stationnement sont situés dans le coin diamétralement opposé de la partie supérieure (38) du compartiment de ravitaillement (30, 130) par rapport à l'axe de pivotement (100).

7. Station de ravitaillement embarquée (10, 10') selon l'une des revendications 1 à 6, **caractérisé en ce que** l'axe de pivotement vertical (100) est disposé à une distance prédéterminée du bord latéral intérieur de l'aéronef (60), de sorte qu'une cavité latérale (46) adjacente à l'axe de pivotement vertical (100) et un espace de stockage aérien (144) formé vers le bas par un plancher intermédiaire (49) en face du compartiment de ravitaillement (30) en forme de boite sont formés entre la cloison légère avant (40) et la cloison légère arrière (20), cette dernière étant optionnellement accessible par une porte latérale (44).

8. Station de ravitaillement embarquée (10, 10') selon la revendication 7, **caractérisé en ce que** la distance prédéterminée de l'axe de pivotement vertical (100) par rapport à la région latérale définie par le bord latéral (60) est prédéterminée de manière à ce que le compartiment de ravitaillement (30, 130') en forme de boite puisse être déplié de 90 degrés pour laisser libre, lorsqu'il est installé dans un aéronef, un espace (81) destiné en particulier à un conteneur coulissant d'urgence prévu sur une porte de l'aéronef associé.

9. Station de ravitaillement embarquée (10, 10') selon la revendication 7 ou 8, **caractérisé par le fait que** les conduites d'alimentation, l'équipement de réfrigération et de ventilation pour le compartiment de ravitaillement (30, 130) et l'équipement qui y est installé sont prévus dans la cavité latérale (46).

10. Station de ravitaillement embarquée (10, 10') selon l'une quelconque des revendications 1 à 9, **caractérisé en ce qu'**il comprend une plaque de base (45) pour le compartiment de ravitaillement (30, 130).

11. Station de ravitaillement embarquée (10, 10') selon l'une quelconque des revendications 1 à 10, **caractérisé en ce que** la distance entre les axes de verrouillage et de rotation (110 et 100) est au moins égale à 25% et au plus égale à 50% de la distance dans la direction longitudinale du compartiment de ravitaillement (30, 130), en particulier entre 33% et 40% de ladite distance.
